# EUROPEAN PATENT APPLICATION

(11) **EP 1 098 289 A2**
(43) Date of publication of application: **09.05.2001**
(21) Application number: 00250361.3
(22) Date of filing: 28.10.2000
(51) Int. Cl.: G09F 27/00

(54) **Advertising method and system for mobile terminal**

(30) Priority: 04.11.1999 JP 31439399
(71) Applicant: NEC CORPORATION, Tokyo (JP)
(72) Inventor: Nihei, Katsumi, Minato-ku, Tokyo (JP)
(74) Representative: Patentanwälte Wenzel & Kalkoff

(57) **Abstract**

The mobile terminal included in the advertising system of the present invention receives an electronic advertising distributed from a center. The mobile terminal comprises; an advertising database that receives and stores a plurality of advertising data; a presentation unit that presents the advertising data to a user; a time obtaining unit that obtains the current time; a location obtaining unit that obtains the current location of the mobile terminal; a stay detection unit that detects the advertising data that the user has visited from the advertising database by using the information from the time obtaining unit and the location obtaining unit as parameters, and that outputs the result as advertising effect data; an advertising effect database that stores the advertising effect data output from the visit advertising detecting unit; and an advertising effect transmission unit that transmits to the advertising center the advertising effect data output from the visit advertising detecting unit.

## Description

### BACKGROUND OF THE INVENTION

### 1. Technical Field of the Invention

The present invention relates to a visit guarantee type advertising system according to which a mobile terminal that can move together with a user and receives electronic advertising obtains information that the user has visited a location relating to the advertising, and transmits the obtained information thereby making it possible to confirm the effect of the advertising, and a visit guarantee type advertising method, a mobile terminal, and a recording medium from which a computer can read the visit guarantee type advertising method as a program.

### 2. Description of the Prior Art

Conventionally, there exist devices and methods that guarantee the effect of advertising by guaranteeing a minimum number of presentation of advertising to users in electronic advertising, as observed in Web banner advertising.

The advertising refers to the advertising described in the Web site. The banner means a flag or a big head line of a full page on the paper, or the like. The advertising includes a fixed banner which displays the content of advertising in a square image file, which has a link to the site desired by an advertiser and which displays only a still image, and a rotation banner that displays advertising of a plurality of advertisers in rotation within a constant display area. In the case of banner advertising, it is possible to count the number of displays of sites, and there are also sites of a system in which the advertising fee increases according to the number of clicks to the banner.

Meanwhile, devices and methods that guarantee the effect of advertising by guaranteeing the number of clicks made to the banner advertising are known.

There are also devices and methods that guarantee the effect of advertising by guaranteeing the amount and number that the users actually pay for the purchase of the advertised products/services after looking at the banner advertising.

However, there exist products/services that cannot be purchased by electronic means only as it is necessary to actually visit the place, to take a meal at a restaurant, for example. Of course, it is possible to advertise by presenting the advertising of a restaurant. However, in order to confirm the effect of the advertising to see whether or not a person who looked at the advertising has actually visited the restaurant, it is necessary to inquire the visitors at the restaurant. This is very troublesome.

### SUMMARY OF THE INVENTION

An object of the present invention is to provide advertisers with a visit guarantee type advertising that has a high advertising effect, based on the subject that it is possible to confirm the advertising effect so the advertiser can easily know whether or not a user has actually visited a place relating to the advertising presented to the user, and that makes it possible to confirm a cost performance level of the advertising cost.

The present invention is characterized in a visit guarantee type advertising system in which a terminal that can move together with a user and that receives electronic advertising obtains information that the user has visited a location relating to the advertising, and transmits the information thereby to make it possible to confirm the effect of the advertising, the visit guarantee type advertising system comprising: an advertising database that stores advertising data that is the electronic advertising transmitted from a center and that includes information on a location relating to the advertising; an advertising effect database that stores advertising effect data showing the effect of the advertising that is the information that the user has visited the location relating to the advertising data; a presentation unit that presents the advertising data to the user; a time obtaining unit that obtains the current time; a location obtaining unit that obtains the current position; a stay detection unit that detects the advertising data that the user has visited from the advertising database by taking into consideration the information from the time obtaining unit and the location obtaining unit, and that outputs it as the advertising effect data; and an advertising effect transmission unit that transmits to the advertising center the advertising effect data that has been output from the visit advertising detecting unit.

Further, the present invention is characterized in a visit guarantee type advertising method in which a terminal that can move together with a user and that receives electronic advertising obtains information that the user has visited a location relating to the advertising, and transmits the information thereby to make it possible to confirm the effect of the advertising, the visit guarantee type advertising method comprising: a step of storing into an advertising database advertising data that includes the electronic advertising transmitted from a center and information on a location relating to the advertising; a step of storing in an advertising effect database advertising effect data that show the effect of the advertising that is the information that the user has visited the location relating to the advertising data; a step of presenting the advertising data to an advertising presenting unit; a time obtaining step for obtaining the current time; a position-obtaining step for obtaining the current position; a visit-advertising detecting step for detecting the advertising data that the user has visited from the advertising database from the time obtaining step and the position-obtaining step, and outputting the advertising data as the advertising effect data; and a step of transmitting to the advertising center the advertising effect data that have been output at the visit-advertising detecting step.

According to the present invention, it is possible to provide the advertiser with an advertising system of a high advertising effect called visit guarantee type advertising, which enables the advertiser to confirm the advertising effect when the advertiser can easily know the information about whether a user has actually visited a place relating to the advertising presented to the user and about the stay date and time, in the case of the advertising of products/services that cannot be purchased by only electronic means and that requires an actual visit to the place, such as the meal at a restaurant, for example.

### BRIEF EXPLANATION OF THE DRAWINGS

Fig. 1 is a diagram showing a configuration of the present invention.
Fig. 2 is a diagram showing a configuration of advertising data according to the present invention.
Fig. 3 is a diagram showing a configuration of advertising effect data according to the present invention.
Fig. 4 is a diagram showing an example of advertising data according to the present invention.
Fig. 5 is a diagram showing an example of advertising effect data according to the present invention.
Fig. 6 is a diagram showing an example of an presentation unit according to the present invention.
Fig. 7 is a diagram showing an operation example of a stay detection unit according to the present invention.

### PREFERRED EMBODIMENT OF THE INVENTION

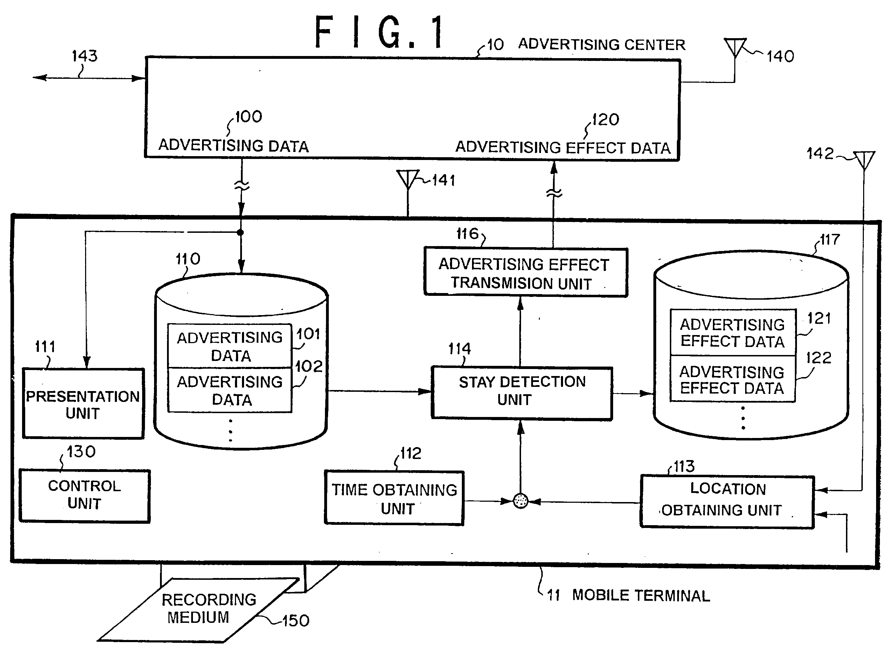

Embodiments of the present invention will be explained in detail with reference to Fig. 1 to Fig. 6.

In Fig. 1, reference numeral 10 denotes a center that transmits and receives signals to and from a communication system, particularly a mobile terminal having a transmitting/receiving unit, by receiving advertising data of the present invention from an advertiser by a wired channel or a radio channel, and reference numeral 11 denotes a mobile terminal such as a mobile terminal mounted on a vehicle, a portable telephone, a handy-phone, etc. An advertising providing system according to the present invention can be easily understood by imagining that advertising data and mobile terminals are used in a wide area, with positions shown by the advertising data located at scattered points.

The advertising providing system shown in Fig. 1 consists of the advertising center 10 that becomes an advertising information supply origin which distributes advertising data from an advertiser in a broadcasting mode, which transmits the advertising data to scattered mobile terminals, which obtains the effect of the advertising data from a response from each mobile terminal, and which reports the advertising effect to the advertiser, and a visit guarantee type advertising terminal 11 or the mobile terminal that is mainly provided with the advertising data and outputs the advertising effect. The advertising center 10 and the visit guarantee type advertising terminal 11 or mobile terminal 11 are mainly connected by radio, and they execute mutual communication in a predetermined radio frequency using an antenna 140 of the advertising center 10 and an antenna 141 of the visit guarantee type advertising terminal 11 or mobile terminal 11.

Regarding this visit guarantee type advertising terminal 11, this is used mainly as a mobile terminal mounted on a vehicle, which receives advertising data from the advertising center 10 by a broadcasting wave or by a radio wave, which stores the advertising data in the advertising database 110 and which at the same time presents the advertising data by the presentation unit 111 such as a display or a speaker. Further, the advertising effect data are detected on the basis of the advertising database 110, the time obtaining unit 112 and the location obtaining unit 113. The detected advertising effect data are transferred to the advertising effect database 117, and at the same time are transmitted from the advertising effect transmission unit 116 to the advertising center 10.

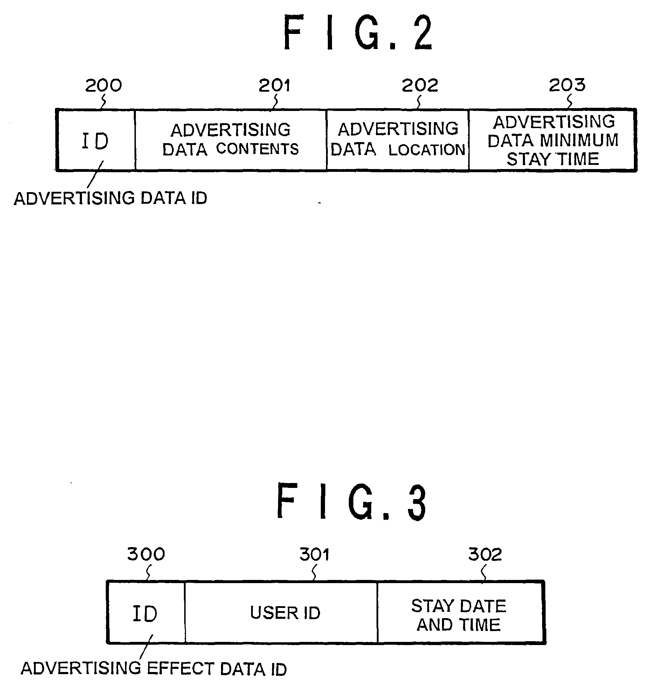

The advertising data in Fig. 2 consists of the advertising data ID 200, the content 201 showing the content, the location202 of the mobile terminal, and the minimum stay time 203. Fig. 3 shows a configuration of the advertising effect data, and this consists of the advertising effect ID 300, the user ID 301, and the stay date and time 302.

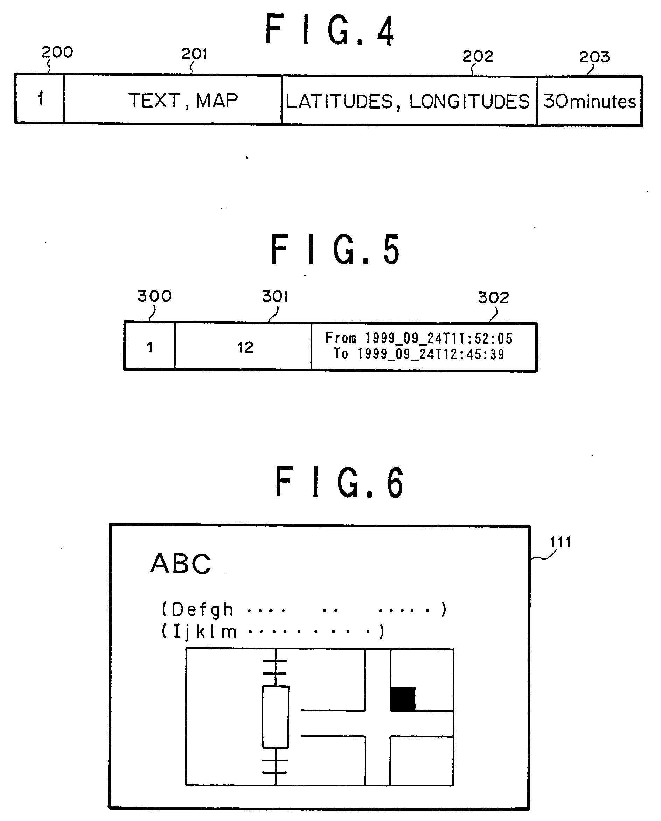

Further, Fig. 4 is a diagram showing an example of the advertising data. Assume for example, that there is an advertising data that has 1 in the advertising data ID 200, has "text = "summer --- at ABC restaurant", with a still image = a map of the restaurant, uses latitude = X1, longitude = Y1, latitude = X2, longitude = Y2, latitude = X3, longitude = Y3, and latitude = X4, longitude = Y4 in the location202 of the mobile terminal, and has 30 minutes in the minimum stay time 203.

Fig. 5 is a diagram showing an example of the advertising effect data. For example, the advertising effect data has 1 in the advertising effect ID 300, has 12 in the user ID 301, and has From 1999-09-24T11:52:05 To 1999-09-24T12:45:39 in the stay date and time 302.

Fig. 6 is a diagram showing an example of the presentation unit111. According to Fig. 6, the whole screen is an advertising image, which describes a map, a shop name of the character, and a feature.

First, as shown in Fig. 1, the advertising data 100, 101 and 102 are electronic advertising transmitted from the advertising center, and include location information relating to the advertising. For example, Web advertising is considered, but the advertising is not limited to this. In this case, the location relating to the advertising means a geographical location relating to the content. For example, the location is a location of a parking area, or a location of a park, relating to this content. In the case of the advertising of a local noted place, the location is a noted area or a sightseeing area. It is possible to specify wide geographical positions according to the development of the advertising industry in recent years. Based on the specification of this geographical location or area, when the advertising data is presented and when an advertising receiver of the mobile terminal who watched or listened to this advertising data has stayed at this location or area during a predetermined period of time, it is possible to decide that the visit has been done as the effect of the advertising.

In further detailing this point, the advertising data 100, 101 and 102 each consists of the ID 200, the content 201, the location202, and the minimum stay time 203. Fig. 4 shows an example of a case that describes about a restaurant in the advertising data 100, 101 and 102.

The ID 200 describes a value for uniquely identifying the advertising data 100, 101 and 102. For example, a numerical value or a character string is described. In the example shown in Fig. 4, a numerical value "1" is described in the ID 200.

The content 201 shown in Fig. 2 describes the advertising content that is presented to the user. For example, it is considered to describe the advertising of a restaurant, a museum, an amusement park, a department store, etc. by using a still image, a dynamic image, sound, a text, and a character. In the example shown in Fig. 4, the content 201 consists of a text and a still image. The text describes "the summer --- at ABC restaurant", and the still image describes the map of the restaurant. Specifically, the screen as shown in Fig. 6 is displayed and presented in the presentation unit111.

Further, the location 202 describes a location relating to the advertising as an area by an optional number. For example, when the advertising data is a restaurant, the location202 relating to the content describes an area of the store and the parking area of the restaurant. For example, when the area is a polygon, it is considered to describe each vertex of the polygon by latitude and longitude, and when the area is a circle, the advertising center 10 of the circle may be described by latitude and longitude, and a radius is described. In the example shown in Fig. 4, four vertexes of the polygon are described by the latitude and the longitude in the location 202.

The minimum stay time 203 describes the time that is regarded as a visit when a stay is made by that time at a location relating to the advertising. This is what is called a time threshold value. In the example shown in Fig. 4, the minimum stay time 203 describes that when a stay is made at the restaurant for 30 minutes, this is regarded as a visit. This minimum stay time is changed depending on the content. For example, the minimum stay time may be determined as 30 minutes in the case of a restaurant and one hour in the case of a park, in consultation with the advertisers.

The advertising effect data 120, 121 and 122 are data that the visit guarantee type advertising system transmits to the advertising center to show the effect of the advertising as the achievement information to indicate that a visit has been made to the location relating to the advertising data 100, 101 and 102.

In further detail, as shown in Fig. 3, the advertising effect data 120, 121 and 122 each consists of the ID 300, the user ID 301, and the stay date and time 302. Fig. 5 shows an example of the description of a visit to a restaurant in the advertising effect data 120, 121 and 122.

The ID 300 shows "1" in the same manner as the ID 200 of the advertising data 100, 101 and 102, and this describes a value for uniquely identifying the advertising data 100, 101 and 102. For example, this describes a numerical value or a character string. In the example shown in Fig. 5, the ID 300 describes "1" that shows the restaurant shown in Fig. 4.

The user ID 301 describes a value that identifies the user as a holder of the visit guarantee type advertising terminal 11 of the mobile terminal that transmits the advertising effect data 120, 121 and 122. For example, this describes a numerical value or a character string. In the example shown in Fig. 5, the user ID 301 describes "12".

The stay date and time 302 describes the date and time during which period a visit has been made at the location relating to the advertising data 100, 101 and 102. In the example shown in Fig. 5, the date and time when the visit started is described as September 24, 1999 at 11 o'clock 52 minutes and 5 seconds, and the date and time when the visit finished is described as September 24, 1999 at twelve o'clock 45 minutes and 39 seconds.

The advertising database 110 shown in Fig. 1 stores the received advertising data 100, 101 and 102 by an optional number. For example, a computer file system and a relevant database are considered, but the database is not limited to these.

The presentation unit111 presents the advertising data 100, 101 and 102 to the user. For example, the presentation unit 111 presents the content 201 of the advertising data 100, 101 and 102 to the user. When the content 201 is an image, a monitor display is considered, and when the content is sound, a speaker is considered. However, the presentation unit is not limited to these. For example, when the content 201 is a text and a still image, the text and the still image are displayed in the monitor as shown in Fig. 6.

The time obtaining unit 112 obtains a current time. For example, a clock is considered. The time may be counted based on a clock for a CPU within the visit guarantee type advertising terminal 11.

The location obtaining unit 113 obtains a current location of the visit guarantee type advertising terminal 11. For example, a GPS (Global Positioning System) using a GPS antenna 142 is considered. However, the location obtaining unit is not limited to this. For example, an earth magnetism sensor, a wheel sensor, a gyro sensor, etc. are arithmetically controlled by an ECU (Electronic Control Unit) to obtain a current position. For example, as the GPS device can measure the latitude and the longitude in the error of a few meters, there is a high possibility that this is normally established in a car navigator in order to specify the stay location and the stay time of the present embodiment. Therefore, the location obtaining unit112 can be set easily.

The stay detection unit 114 detects the advertising data 100, 101 and 102 that the user has visited from the advertising database 110, by taking into consideration the information from the time obtaining unit112 and the location obtaining unit113, thereby to calculate the stay time. When a stay of a predetermined time or longer has been confirmed, the stay detection unit 114 outputs the result as the advertising effect data 120, 121 and 122.

Further, the advertising effect transmission unit116 can be used in common with the transmitting unit to the receiving unit used as a mobile terminal. It may be regarded that there is a transmission communication of the advertising effect in one of sound, video or a data communication between the mobile terminal and the advertising center 10 at a base station. The advertising data demodulated from the receiving unit of a mobile terminal (not shown) is displayed in output to the presentation unit111 and at the same time, when the advertising data has been stored in the advertising database 110, a communication message is transmitted from the transmitting unit116 to the advertising center 10 to the effect that the advertising data has been stored.

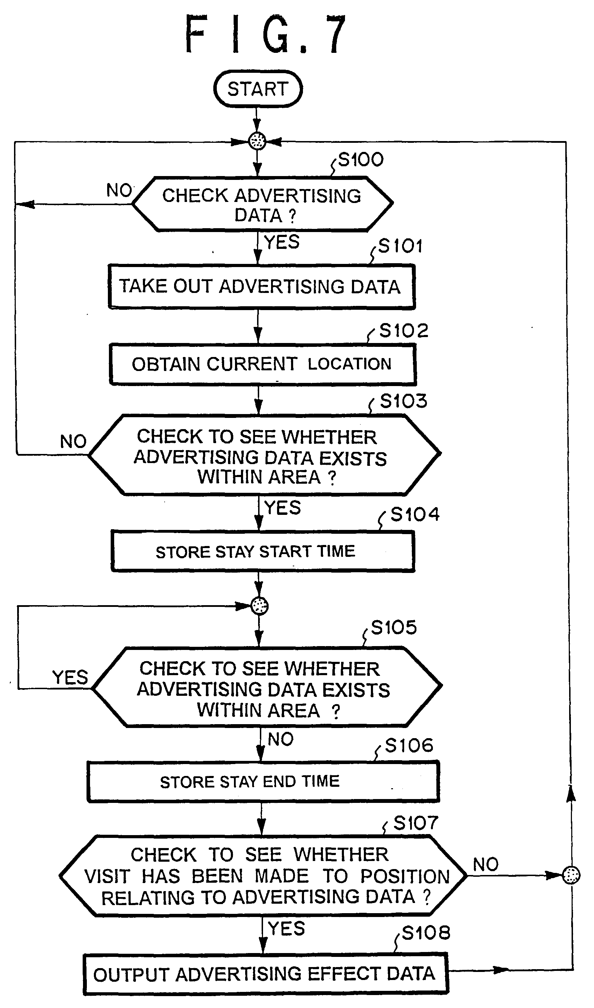

The processing method of the stay detection unit 114 will be explained below with reference to Fig. 7. First, instead of a narrow area where service advertisers are concentrated as in Japan, a wide area where advertisers are scattered and there is only one advertiser in the service area as in the USA will be taken as an example.

First, it is checked whether or not there exist the advertising data 100, 101 and 102 in the advertising database 110 (S100). In this case, it is assumed, for example, that a restaurant on a highway is an advertiser and the restaurant has registered the advertising data in the advertising database 110 of the visit guarantee type advertising terminal 11 via the advertising center 10. When the advertising data exist, the step proceeds to S101, and when the advertising data do not exist, the step shifts to S100 in order to check once again. The advertising data 100, 101 and 102 are taken out by one from the advertising database 110 (S101). A current location of the visit guarantee type advertising terminal 11 is obtained from the location obtaining unit113 (S102).

Next, it is checked whether the current location exists within the area of the location202 of the advertising data taken out at S101, and when it is within the area, the step proceeds to S104, and when it does not exist in the area, the step shifts to S100 (S103). The current time is obtained from the time obtaining unit112, and this is set as the stay starting time of the advertising data taken out at S101 (S104). The current location of the visit guarantee type advertising terminal 11 is obtained from the location obtaining unit113, and it is checked whether the current location is within the area of the location202 of the advertising data taken out at S101. When the current location is within the area, the step shifts to S105 again, and when the current location is not within the area, the step proceeds to S106(S105).

Next, the current time is obtained from the time obtaining unit112, and this is set as the stay finishing time of the advertising data taken out at S101 (S106). When the time obtained by subtracting the stay starting time from the stay finishing time exceeds the minimum stay time 203 of the advertising data taken out at S101, it is regarded that the visit has been made, and the step proceeds to S108. When the time has not exceeded, the step shifts to S100 (S107). The ID 300 of the advertising effect data is set as the ID 200 of the advertising data taken out at S101, and the stay starting time and the stay finishing time are set to the state date and time 302 of the advertising effect data, which is instantly stored in the advertising effect database 117. At the same time, the advertising effect data is instantly output to the advertising effect transmission unit116, or instead of instantly outputting to the advertising effect transmission unit116, the advertising effect data 120, 121 and 122 stored in the advertising effect database 117 are periodically collected by taking into consideration the output from the time obtaining unit112, and the result is output to the advertising effect transmission unit116. The step then shifts to S100 (S108).

The above explains one embodiment. As another embodiment, there is considered a case where instead of detecting the visit advertising in real time, the information periodically obtained from the time obtaining unit112 and the location obtaining unit 113 are stored as a set of the location and the time of visit to this position. The stay detection unit114 periodically compares the set of the location and the time of visit to this location with the advertising data 100, 101 and 102 stored in the advertising database 110, thereby to detect the visit to the advertising data.

The advertising effect database 117 stores the advertising effect data 120, 121 and 122 that have been output from the stay detection unit114.

The advertising effect transmission unit116 transmits to the advertising center the advertising effect data 120, 121 and 122 that have been output from the stay detection unit114.

The processing method of the advertising effect transmission unit116 will be explained next. The advertising effect transmission unit116 uniquely sets the user ID 301 of the advertising effect data 120, 121 and 122. For example, when the agreement has been obtained from users who visit the advertising data, the user ID 301 unique for each user is set. Thus, it is possible to know what user has visited what location relating to the advertising.

Further, when the advertising data has been received from the advertising center 10, the fact of the reception is stored in the advertising database 110, and at the same time, the fact of the storing of the advertising data in the advertising database 110 is communicated to the advertising center 10 in a predetermined code pattern via the advertising effect transmission unit116 in one embodiment of the transmitting unit. With this arrangement, it is possible to detect an advertising response rate (number of advertising effect data/number of advertising data) of a mobile terminal within a predetermined period. At the same time, it is possible to detect an advertising effect rate (number of advertising effect data/number of communicating mobile terminals) of the advertising based on the number of mobile terminals that have received and stored the advertising data communicated to the advertising center 10 and the number of advertising effect data. This makes it possible to realize the management of numerical values of the advertising effect.

Alternatively, the user ID 301 of the advertising effect data 120, 121 and 122 is set at random at each time of transmitting the advertising effect data. For example, it is possible to protect the privacy of individuals by making it impossible to specify the users when the user ID is set at random at each time of transmitting the advertising effect data in consideration of the privacy of the users.

In the above embodiments, the case has been explained in which it is possible to specify the advertising data and the stay for a predetermined period in the area specified by the advertising data in a wide area. When in the near future it becomes possible to finely specify the location of the mobile terminal mounted on a vehicle by GPS or the like and also when the performance improves to be able to securely obtain the location specified by each advertising data even when the advertising data increases, it becomes possible to securely detect the advertising effect not only in a wide area but also in a concentrated area. Further, it can be predicted that it becomes possible to easily detect the advertising effect by a portable mobile terminal, not limited to the mobile terminal mounted on a vehicle, in a similar manner to that of the mobile terminal mounted on a vehicle, based on the improvement of the performance of the location obtaining unit 113.

Further, in Fig. 1, the visit guarantee type advertising terminal 11 is mounted with a recording medium 150 like a floppy disk and a smart memory, and a computer program, databases and the like that are used by the visit guarantee type advertising terminal 11 and stored in advance in this system can be stored in the recording medium as software. Based on this recording medium, it is possible to shift the program for obtaining the advertising effect of the advertising data to other mobile terminal, to operate this program by the computer, and to transmit the advertising effect corresponding to the advertising data to the advertising center. In this arrangement, it is possible to report the advertising effect to the advertiser as a sponsor via the advertising center.

Further, in the above embodiments, the location and the stay time of the user are set as the parameters of the advertising effect. However, depending on the advertising data, it is not possible to specify the location relating to the content, such as in the communication service industry and the railway and transportation industries, for example. In this case, the advertiser may specify a special yardstick on which basis the advertising effect can be measured. Thus, it may be so arranged that the advertising effect can be detected based on this yardstick instead of the position. In the case of the provider of the communication service industry, advertising data may be broadcast and the advertising effect is obtained based on how many stations receive services during each response acceptance time period. In this case, the advertising effect can be judged by using the number of users and the time as parameters.

## Claims

1. An advertising system, wherein a mobile terminal receives advertising data through a communication channel from an advertising center which receives, through said communication channel from said mobile terminal, advertising effect data whether said mobile terminal actually visited an advertised location, wherein said mobile terminal comprises:
an advertising database for storing said advertising data;
an advertising effect database for storing said advertising effect data;
a presentation unit for presenting said advertising data;
a time obtaining unit for obtaining the current time;
a location obtaining unit for obtaining the current location;
a stay detection unit for detecting said advertising data on the basis of which said mobile terminal stayed said advertised location and for transferring said advertising data on the basis of which said mobile terminal stayed said advertised location to said advertising effect database; and
an advertising effect transmission unit for transmitting said advertising effect data toward said advertising center.

2. The advertising system according to Claim 1, wherein:
said advertising data includes an advertising data identifier (ID) for identifying said advertisement, advertised contents, said advertised location and a minimum stay time by which a stay is deemed to be an actual stay at said advertised location; and
said advertising effect data includes said advertising data ID, a user ID for identifying said mobile terminal and a date and time of said actual stay at said advertised location.

3. The advertising system according to Claim 1, wherein said stay detection unit notifies said advertising effect database of said advertising effect data, when said actual stay is detected.

4. The advertising system according to Claim 1, wherein said stay detection unit notifies periodically said advertising effect transmission unit of said advertising effect data.

5. The advertising system according to Claim 1, wherein said stay detection unit:
obtains a stay start time at which said mobile terminal enters a prescribed vicinity of said advertised location, and a stay end time at which said mobile terminal goes out of said vicinity exits;
calculates a stay time by subtracting said stay start time from said stay end time;
compares said stay time with said minimum stay time;
and outputs said advertising effect data including an advertising data identifier, said stay start time and said stay end time, when said stay time is greater than or equal to said minimum stay time.

6. The advertising system according to Claim 2, wherein said advertising effect transmission unit decides said user ID uniquely.

7. The advertising system according to Claim 2, wherein said advertising effect transmission unit decides said user ID randomly, every time when said advertising effect data are transmitted.

8. The advertising system according to Claim 2, wherein said advertised contents include images, voices, sounds, or texts.

9. An advertising method, using a system, wherein a mobile terminal receives advertising data through a communication channel from an advertising center which receives, through said communication channel from said mobile terminal, advertising effect data whether said mobile terminal actually visited an advertised location, which comprises the steps of:
storing in an advertising database said advertising data transmitted by said advertising center;
storing in an advertising effect database said advertising effect data;
presenting in a presentation unit said advertising data;
obtaining the current time;
obtaining the current location;
detecting said advertising data on the basis of which said mobile terminal stayed said advertised location and for transferring to said advertising effect database said advertising data on the basis of which said mobile terminal stayed said advertised location; and
an advertising effect transmission unit for transmitting said advertising effect data toward said advertising center.

10. The advertising method according to Claim 9, wherein:
said advertising data includes an advertising data identifier (ID) for identifying said advertisement, advertised contents, said advertised location and a minimum stay time by which a stay is deemed to be an actual stay at said advertised location; and
said advertising effect data includes said advertising data ID, a user ID for identifying said mobile terminal and a date and time of said actual stay at said advertised location.

11. The advertising method according to Claim 9, wherein said advertising effect data are transmitted to said advertising center, every time when said actual stay is detected.

12. The advertising method according to Claim 9, wherein said advertising effect data are transmitted periodically to said advertising center.

13. The advertising method according to Claim 9, wherein:
the detecting step comprises the steps of;
obtaining a stay start time at which said mobile terminal enters a prescribed vicinity of said advertised location, and a stay end time at which said mobile terminal goes out of said vicinity exits,
calculating a stay time by subtracting said stay start time from said stay end time, and
comparing said stay time with said minimum stay time; and
the outputting step is a step of outputting said advertising effect data including an advertising identifier, said stay start time and said stay end time, when said stay time is greater than or equal to said minimum stay time.

14. The advertising method according to Claim 10, wherein said user ID is decided uniquely.

15. The advertising method according to Claim 10, wherein said user ID is decided randomly, every time when said advertising effect data are transmitted to said advertising center.

16. The advertising method according to Claim 10, wherein said advertised contents include images, voices, sounds, or texts.

17. A mobile terminal which receives advertising data through a communication channel from an advertising center which receives, through said communication channel from said mobile terminal, advertising effect data whether said mobile terminal actually visited an advertised location, wherein said mobile terminal comprises:
an advertising database for storing said advertising data;
an advertising effect database for storing said advertising effect data;
a presentation unit for presenting said advertising data;
a time obtaining unit for obtaining a current time;
a location obtaining unit for obtaining a current location;
a stay detection unit for detecting said advertising data on the basis of which said mobile terminal stayed said advertised location and for transferring said advertising data on the basis of which said mobile terminal stayed said advertised location to said advertising effect database; and
an advertising effect transmission unit for transmitting said advertising effect data toward said advertising center.

18. A computer-readable recording medium for storing a program based on which a computer can operate, wherein said program contains the steps of the advertising method according to claim 9.
